# EUROPÄISCHE PATENTSCHRIFT

(11) **EP 3 490 877 B1**
(45) Veröffentlichungstag und Bekanntmachung des Hinweises auf die Patenterteilung: **04.12.2019**
(21) Anmeldenummer: 17788206.5
(22) Anmeldetag: 23.10.2017
(51) Int. Cl.: B62D 65/18, B62D 65/02

(54) **BEARBEITUNGSSTATION ZUM ZUFÜHREN VON SPANNRAHMEN IN EINEN ARBEITSBEREICH UND VERFAHREN ZUM WECHSELN VON SPANNRAHMEN**
PROCESSING STATION FOR FEEDING CLAMPING FRAMES INTO A WORKING AREA AND METHOD FOR CHANGING CLAMPING FRAMES
POSTE DE TRAITEMENT SERVANT À L'ACHEMINEMENT DE CADRES DE SERRAGE VERS UNE ZONE DE TRAVAIL ET PROCÉDÉ DE CHANGEMENT DE CADRES DE SERRAGE

(30) Priorität: 03.11.2016 DE 102016221569
(43) Veröffentlichungstag der Anmeldung: 05.06.2019
(73) Patentinhaber: ThyssenKrupp System Engineering GmbH, 74076 Heilbronn (DE); thyssenkrupp AG, 45143 Essen (DE)
(72) Erfinder: KIPPING, Tino, 66839 Schmelz (DE); SCHMIDT, Achim, 66629 Freisen (DE)
(74) Vertreter: thyssenkrupp Intellectual Property GmbH
(86) Internationale Anmeldenummer: PCT/EP2017/077014
(87) Internationale Veröffentlichungsnummer: WO 2018/082956

(56) Entgegenhaltungen:
- EP-A1- 2 279 929
- EP-A2- 0 642 878
- EP-A2- 1 686 048
- US-A1- 2003 115 746

## Beschreibung

Die Erfindung betrifft eine Bearbeitungsstation, insbesondere Framingstation, für als Fahrzeugkarosserieteile ausgebildete Werkstücke, mit zumindest einem Spannrahmen, zumindest einem Magazinbereich zum Vorhalten der Spannrahmen, einem Arbeitsbereich zum Bearbeiten der Werkstücke und einer Zuführvorrichtung zum Zuführen der Spannrahmen zwischen dem zumindest einen Magazinbereich und dem Arbeitsbereich in einer Längsrichtung X und einer Querrichtung Y, wobei die Zuführvorrichtung eine bodenbasierte Schienenanordnung zum Führen und Tragen der Spannrahmen aufweist.

Derartige Bearbeitungsstationen und Framingstationen sind bekannt und dienen dazu, beispielsweise Fahrzeugkarosserieteile in einer vorgegebenen exakten Position zu spannen und anschließend durch einen Fügevorgang endgültig miteinander zu verbinden. Bei dem Fügevorgang kann es sich um Schweißen, Kleben, Nieten oder auch Crimpen handeln. Für den Vorgang des exakten Positionierens des einen Karosseriebauteils, beispielsweise einer Seitenwand, an ein anderes Karosseriebauteil, beispielsweise eine Bodengruppe, werden sogenannte Spannrahmen eingesetzt. Ein oder mehrere dieser Spannrahmen werden in einem Magazinbereich vorgehalten beziehungsweise bevorratet und mittels einer Zuführvorrichtung in den Arbeitsbereich und zurück verfahren beziehungsweise transportiert. Ein Spannrahmen ist regelmäßig als aufrecht stehender, weitestgehend ebener Tragrahmen ausgebildet, an dem mehrere betätigbare Spanner gehalten sind, über die die Karosserieteile an vorbestimmten Punkten gegeneinander verspannt werden, um dort gefügt zu werden. Ein Spannrahmen an sich ist nicht dazu ausgebildet ein Karosserieteil zu tragen und zu transportieren, sondern lediglich dazu, ein Karosseriebauteil, das in einem vorhergehenden Montageschritt an ein zweites Karosseriebauteil gelascht oder auch geclipst vorpositioniert wurde, in eine endgültige, konstruktiv vorgegebene Position zu bringen.

Aus der DE 10 2012 009 061 A1 ist eine Bearbeitungsstation bekannt, bei der Spannrahmen über zwei Transportsysteme an einer Hängeschienenanordnung zwischen einem Magazinbereich und einem Arbeitsbereich verfahren werden können.

Hängeschienenanordnungen sind zumindest dann nicht optimal, wenn von oberhalb des Arbeitsbereichs Werkzeuge, beispielsweise Schweißanlagen beziehungsweise -roboter, bedarfsweise zugeführt werden müssen.

Die EP 1 686 048 A2 zeigt eine Bearbeitungsstation, bei der die Spannrahmen auf einer Schienenanordnung bodenbasiert zwischen einem Magazinbereich und einem Arbeitsbereich verfahren werden.

Schwierigkeiten bei derartigen Anordnungen bildet grundsätzlich die Anordnung des Antriebs, mit der die Zuführvorrichtung angetrieben wird. So gibt es die Möglichkeit jeden Spannrahmen mit einem Antrieb auszustatten. Dies ist aufwändig und teuer. Weiterhin gibt es die Möglichkeit einen Antrieb im Bereich der Schienenanordnung der Zuführvorrichtung anzuordnen, wobei sich hier allerdings die Anforderung ergibt, die Antriebsleistung bedarfsweise auf den zu verfahrenden Spannrahmen übertragen zu müssen.

Ausgehend hiervon besteht die Aufgabe der vorliegenden Erfindung darin, eine Bearbeitungsstation bereitzustellen, deren Zuführvorrichtung mit einer bodenbasierten Schienenanordnung ausgestattet ist und deren Antrieb zum Verfahren der Spannrahmen platzsparend und konstruktiv einfach ausgebildet ist.

Die Aufgabe wird gelöst durch eine Bearbeitungsstation, insbesondere Framingstation, für als Fahrzeugkarosserieteile ausgebildete Werkstücke, umfassend zumindest einen Spannrahmen, zumindest einen Magazinbereich zum Vorhalten der Spannrahmen, einen Arbeitsbereich zum Bearbeiten der Werkstücke und eine Zuführvorrichtung zum Zuführen der Spannrahmen zwischen dem zumindest einen Magazinbereich und dem Arbeitsbereich in einer Längsrichtung X und einer Querrichtung Y, wobei die Zuführvorrichtung eine bodenbasierte Schienenanordnung zum Führen und Tragen der Spannrahmen und zumindest eine Antriebsanordnung mit zwei parallel zu der Schienenanordnung ausgerichteten Übertragungselementen aufweist, wobei die Übertragungselemente voneinander unabhängig an den jeweils zuzuführenden Spannrahmen ankoppelbar sind, um den Spannrahmen in einem angekoppelten Zustand in Längsrichtung X zu verfahren.

Eine erfindungsgemäße Bearbeitungsstation kann im Hinblick auf den Magazinbereich und auch den Transferbereich modular ausgebildet sein. Beispielsweise kann der Magazinbereiche aus zwei Magazinen bestehen, so dass die Zuführvorrichtung jeden dieser Magazine mit dem Arbeitsbereich verbindet.

Eine erfindungsgemäße Bearbeitungsstation bietet den Vorteil, dass die Antriebsanordnung in die Zuführvorrichtung integriert ist und hierbei die Übertragungselemente platzsparend parallel zu der Schienenanordnung liegen. Auch kann hierdurch darauf verzichtet werden, jeden Spannrahmen mit einem eigenen Antrieb auszustatten. Auch ist durch das Bereitstellen von zwei Übertragungselementen gewährleistet, dass jedes Übertragungselement für sich genommen kürzer als die Breite der Spannrahmen ausgeführt sein kann. Zwei parallele Übertragungselemente sind darüber hinaus aber auch einfacher darzustellen als beispielsweise eine teleskopierbare Anordnung zweier Teleskopelemente.

Somit sieht eine vorteilhafte Ausgestaltung der Erfindung vor, dass die Übertragungselemente als Zahnstangen ausgebildet sind. Diese sind fertigungstechnisch einfach darzustellen und sind hinreichend robust im Hinblick auf Verschleiß im rauen Umfeld einer Fertigungsumgebung.

Eine vorteilhafte Ausgestaltung der Erfindung sieht vor, dass die Antriebsanordnung jeweilige mit den Übertragungselementen in einer Wirkverbindung stehende Antriebe umfasst. Hierdurch ist gewährleistet, dass die Übertragungselemente unabhängig voneinander bewegt werden können. Obwohl für jedes Übertragungselement ein Antrieb bereitgestellt werden muss, ist dies konstruktiv vergleichsweise einfach darzustellen, im Gegensatz zu einer Anordnung, bei der jeder Spannrahmen einen Antrieb aufweist.

Eine vorteilhafte Ausgestaltung der Erfindung sieht vor, dass eine Verzahnung der Zahnstangen nach vertikal unten gerichtet ist. Hierdurch ergibt sich die Möglichkeit einer platzsparenden Anordnung des Antriebs für jede Zahnstange, da der Antrieb unterhalb der Schienenanordnung platziert werden kann, um von unten in die darüber befindliche Zahnstange eingreifen kann. Bevorzugt bildet der Antrieb hierfür ein Antriebsritzel aus.

Eine vorteilhafte Ausgestaltung der Erfindung sieht vor, dass die Spannrahmen jeweils zumindest eine Rollenanordnung umfassen, wobei die Spannrahmen über die Rollenanordnung gegenüber der Schienenanordnung gelagert sind. Hierüber ist gewährleistet, dass das Gewicht des Spannrahmens von der Schienenanordnung getragen wird. Weiterhin ist durch die Rollenanordnung sichergestellt, dass ein stehender Spannrahmen der Antriebsanordnung einen möglichst geringen Widerstand beim Anfahren entgegensetzt.

Eine vorteilhafte Ausgestaltung der Erfindung sieht vor, dass an in Längsrichtung X entgegengesetzten Endbereichen der Übertragungselemente Mitnehmerelemente zum Ankoppeln der Spannrahmen an die Übertragungselemente angeordnet sind. Hierdurch ergibt sich eine erhöhte Flexibilität bei der Anzahl der Möglichkeiten die Spannrahmen an die Übertragungselemente anzukoppeln.

Eine vorteilhafte Ausgestaltung der Erfindung sieht vor, dass die Antriebsanordnung, vorzugsweise pneumatische betätigte, Betätigungsaktuatoren umfasst, über die in jeweiligen Übernahmepositionen der Übertragungselemente die Mitnehmerelemente an die Spannrahmen ankoppelbar sind. Von Vorteil ist, dass die Betätigungsaktuatoren bezüglich der Schienenanordnung stationär ausgebildet sein können, da sie nämlich nur in Übernahmepositionen der Übertragungselemente ihre Betätigungsfunktion ausführen müssen. Als Gegenstück zu den Mitnehmerelementen weisen die Spannrahmen bevorzugt Koppelbolzen auf, über die die Spannrahmen formschlüssig an die Mitnehmerelemente ankoppelbar sind.

Eine vorteilhafte Ausgestaltung der Erfindung sieht vor, dass sich die Zuführvorrichtung in Längsrichtung X von dem Magazinbereich, über einen Transferbereich bis in den Arbeitsbereich erstreckt, wobei die Antriebsanordnung im Transferbereich angeordnet ist. Hier ist in vorteilhafter Weise eine mittige Anordnung der Antriebsanordnung bereitgestellt, von der ausgehend die Antriebsanordnung sowohl Spannrahmen, die im Magazinbereich vorgehalten werden, als auch Spannrahmen, die sich im Arbeitsbereich befinden, verfahren kann.

Eine vorteilhafte Ausgestaltung der Erfindung sieht vor, dass die Schienenanordnung im Magazinbereich, im Transferbereich und im Arbeitsbereich untereinander getrennte Schienenabschnitte bildet. Hierdurch ist es möglich die einzelnen, voneinander getrennten Schienenbereiche bei Bedarf in Querrichtung Y zu verschieben. Hierbei kann insbesondere vorgesehen sein, dass der im Transferbereich angeordnete Schienenabschnitt mittels einer zweiten Antriebsanordnung in Querrichtung Y verfahrbar ist. Bei weiterer Ausgestaltung kann vorgesehen sein, dass der im Arbeitsbereich angeordnete Schienenabschnitt mittels einer dritten Antriebsanordnung in Querrichtung Y verfahrbar ist.

Die Aufgabe wird ferner gelöst durch ein Verfahren zum Wechseln eines Spannrahmens in einer Bearbeitungsstation wie beschrieben, wobei sich ein erster Spannrahmen in dem Arbeitsbereich in Bearbeitungsposition und zumindest ein zweiter Spannrahmen in dem Magazinbereich in einer Vorhalteposition befindet, mit den Schritten:
- Verfahren des ersten Spannrahmens im Arbeitsbereich heraus aus einer Bearbeitungsposition in Querrichtung Y;
- Ankoppeln des ersten Übertragungselements der ersten Antriebsanordnung an den ersten Spannrahmen;
- Verfahren des ersten Spannrahmens über das erste Übertragungselement der ersten Antriebsanordnung in Längsrichtung X von dem Arbeitsbereich in den Transferbereich in eine Übernahmeposition;
- Verfahren des zweiten Übertragungselements der ersten Antriebsanordnung in Längsrichtung X in die Übernahmeposition;
- Ankoppeln des zweiten Übertragungselements der ersten Antriebsanordnung an den ersten Spannrahmen;
- Abkoppeln des ersten Übertragungselements der ersten Antriebsanordnung von dem ersten Spannrahmen
- Verfahren des ersten Spannrahmens über das zweite Übertragungselement der ersten Antriebsanordnung in Längsrichtung X in eine Transferposition in dem Transferbereich;
- Verfahren des ersten Übertragungselements der ersten Antriebsanordnung in die Transferposition.

Eine vorteilhafte Ausgestaltung des Verfahrens sieht vor, dass parallel zu dem Verfahren des ersten Spannrahmens über das erste Übertragungselement der ersten Antriebsanordnung in die Übernahmeposition in dem Transferbereich die folgenden Schritte ausgeführt werden:
- Verfahren des zweiten Spannrahmen über das zweite Übertragungselement der zweiten Antriebsanordnung in Längsrichtung X in eine Übernahmeposition eines zweiten Transferbereichs;
- Verfahren des ersten Übertragungselements der zweiten Antriebsanordnung in Längsrichtung X in die Übernahmeposition des zweiten Transferbereichs
- Ankoppeln des ersten Übertragungselements der zweiten Antriebsanordnung an den zweiten Spannrahmen und Abkoppeln des zweiten Übertragungselements der zweiten Antriebsanordnung von dem zweiten Spannrahmen;
- Verfahren des zweiten Spannrahmens über das erste Übertragungselement der zweiten Antriebsanordnung in Längsrichtung X von der Übernahmeposition des Transferbereichs in den Arbeitsbereich;
- Verfahren des zweiten Spannrahmens im Arbeitsbereich in die Bearbeitungsposition in Querrichtung Y.

Die Erfindung wird nachfolgend mit weiteren Merkmalen, Einzelheiten und Vorteilen anhand der beigefügten Figuren erläutert. Die Figuren illustrieren dabei lediglich beispielhafte Ausführungsformen der Erfindung. Hierin zeigen
- Figur 1: eine schematische Gesamtansicht einer Bearbeitungsstation;
- Figur 2: eine Detaillierung des Transferbereichs einer Bearbeitungsstation in Draufsicht;
- Figur 3: eine Detaillierung des Transferbereichs einer Bearbeitungsstation in Seitenansicht;
- Figur 4: eine weitere Detaillierung einer Bearbeitungsstation in perspektivischer Darstellung;
- Figur 5: eine Detaillierung des Transferbereichs einer Bearbeitungsstation in perspektivischer Darstellung;
- Figur 6: eine Detaillierung eines Spannrahmens;
- Figuren 7 bis 9: eine schematische Darstellungen einer Bearbeitungsstation in verschiedenen Verfahrpositionen.

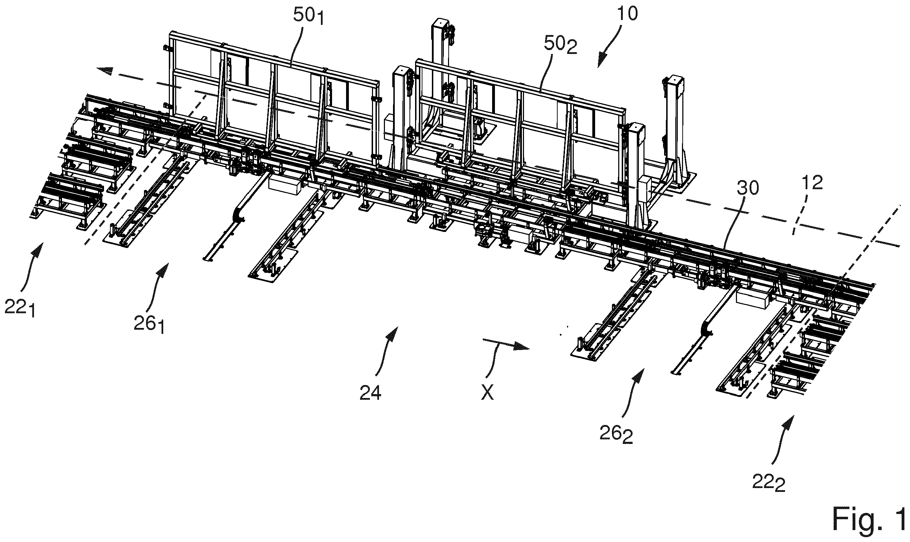

Die Figur 1 zeigt eine schematische Gesamtansicht einer Bearbeitungsstation 10 gemäß einer beispielhaften Ausführungsform. Die Bearbeitungsstation 10 ist längsseits einer Förderstrecke 12 angeordnet. Die Förderstrecke 12 ist vorliegend mit einem gestrichelten Pfeil symbolisiert und dient dem fortlaufenden Fördern von Werkstücken, beispielsweise Fahrzeugkarosserieteile. Die Werkstücke werden entlang der Förderstrecke 12 mittels nicht dargestellter Fördermittel gefördert. Die Bearbeitungsstation 10 dient der Bearbeitung der Werkstücke in einem vorgesehen Abschnitt der Förderstrecke 12. Die Bearbeitung der Werkstücke kann beispielsweise einen Fügevorgang mittels ebenfalls nicht dargestellter Schweißroboter umfassen.

Die dargestellte Ausführungsform der Bearbeitungsstation 10 umfasst zunächst einen mittig angeordneten Arbeitsbereich 24, jeweils zu beiden Seiten des Arbeitsbereichs 24 sich anschließende Transferbereiche 26₁ und 26₂ und wiederum zu beiden Seiten der Transferbereiche 26₁, 26₂ sich jeweils anschließende Magazinbereiche 22₁ und 22₂. In dem Arbeitsbereich 24 erfolgt die zuvor exemplarisch beschriebene Bearbeitung der Werkstücke. Die Bearbeitungsstation 10 umfasst ferner eine Zuführvorrichtung 30, die den Arbeitsbereich 24, die Transferbereiche 26₁, 26₂ und die Magazinbereiche 22₁, 22₂ in einer Längsrichtung X parallel zu der Förderstrecke 12 miteinander verbindet. Die Zuführvorrichtung 30 dient dem Zuführen von Spannrahmen 50 aus einem Magazinbereich 22₁, 22₂ über den jeweiligen Transferbereich 26₁, 26₂ in den Arbeitsbereich 24. Vorliegend sind zwei Spannrahmen 50₁ und 50₂ dargestellt, von denen sich der eine in dem Arbeitsbereich 24 und der andere in dem Transferbereich 26₁ befindet, um beispielsweise dem Magazinbereich 22₁ zugeführt zu werden.

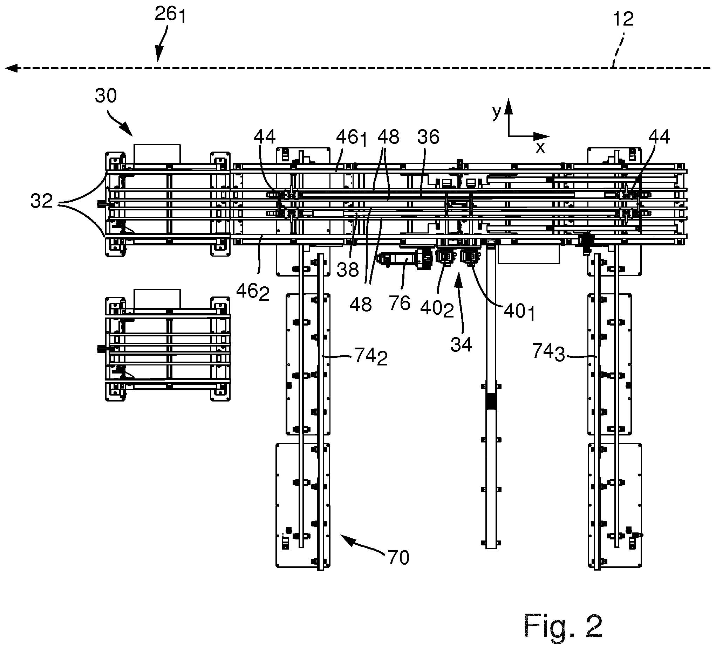

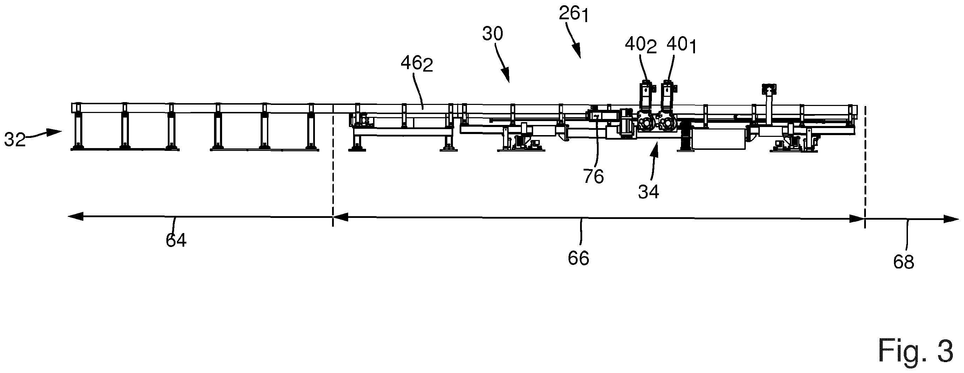

Die Figuren 2 und 3 zeigen eine Detaillierung des Transferbereichs 26₁; Figur 2 in einer Draufsicht und Figur 3 in einer Seitenansicht. Zu erkennen ist zunächst, dass die Zuführvorrichtung 30 eine Schienenanordnung 32 zum Führen und Tragen der hier nicht dargestellten Spannrahmen 50 aufweist. Die Schienenanordnung 32 weist bezogen auf die Förderstrecke 12 eine innere Schiene 46₁ und eine äußere Schiene 46₂ auf. Die Schienen 46₁ und 46₂ dienen dazu, in noch zu beschreibender Weise die Spannrahmen 50 entlang der Längsrichtung X zu führen und zu tragen. Insofern ist bevorzugt vorgesehen, dass die Schienenanordnung 32 lediglich als passive Komponente ausgebildet ist. Auch ist bevorzugt, dass sich die Schienenanordnung 32 durchgängig über den Magazinbereich 22, den Transferbereich 26 und den Arbeitsbereich 24 erstreckt, wobei allerdings für jeden Bereich 22, 26, 24 ein von dem jeweils benachbarten Abschnitt getrennter, aber mit diesem fluchtenden, Schienenabschnitt 64, 66, 68 vorgesehen ist, wie dies in der Figur 3 verdeutlicht ist.

Weiterhin weist die Zuführvorrichtung 30 eine Antriebsanordnung 34 auf, die im Wesentlichen innerhalb der und parallel zu der Schienenanordnung 32 angeordnet sein kann, wobei einige oder alle Komponenten der Antriebsanordnung 34 auch unterhalb der Horizontalebene der Schienen 46₁, 46₂ angeordnet sein können. Die Antriebsanordnung 34 weist zwei parallel zueinander und parallel zu der Schienenanordnung 32 verlaufende Übertragungselemente 36 und 38 auf. Bevorzugt sind die Übertragungselemente 36, 38 als Zahnstangen ausgebildet, wobei dann vorgesehen sein kann, dass die jeweilige Verzahnung nach vertikal unten gerichtet ist. Die Übertragungselemente 36, 38 sind in der Figur 2 in jeweils einer mittleren Position bezüglich des Transferbereichs 26₁ angeordnet, so dass diese Position als jeweilige Transferposition der Übertragungselemente 36, 38 bezeichnet werden kann. Bevorzugt sind die Übertragungselemente 36, 38 zu beiden Seiten von jeweiligen Seitenführungen 48 geführt, so dass die Übertragungselemente 36, 38 innerhalb der Seitenführungen 48 in Längsrichtung X verschiebbar sind. Vorgesehen ist, dass beide Übertragungselemente 36, 38 ausgehend von der Transferposition in beide Richtungen in eine jeweilige Übernahmeposition verschiebbar sind, wie im weiteren Verlauf noch beschrieben wird.

Die Antriebsanordnung 34 umfasst weiterhin mehrere Antriebe 40, wobei vorzugsweise zwei Antriebe 40₁ und 40₂ vorgesehen sind, die als Elektromotoren ausgebildet sein können. Mittels des Antriebs 40₁ kann das Übertragungselement 36 und mittels des Antriebs 40₂ kann das Übertragungselement 38 zwischen den beschriebenen Transfer- und Übernahmepositionen in Längsrichtung X verschoben werden. Bevorzugt ist jeweils ein Übertragungselement der Antriebe 40₁, 40₂ als Zahnradritzel ausgeführt, so dass jedes der Zahnradritzel mit der bevorzugten Ausgestaltung der Übertragungselemente 36, 38 als Zahnstange in einen Verzahnungseingriff gebracht werden kann.

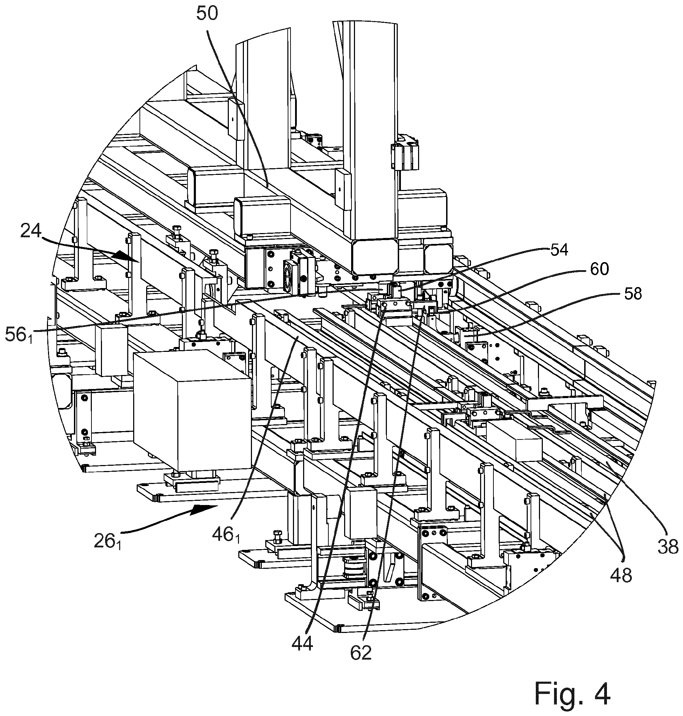

Die Übertragungselemente 36, 38 weisen in Längsrichtung X entgegengesetzten Endbereichen Mitnehmerelemente 44 zum Ankoppeln der Spannrahmen 50 an die Übertragungselemente 36, 38 auf, um in einem angekoppelten Zustand die Spannrahmen 50 in Längsrichtung X entlang der Zuführvorrichtung 30 zu verfahren. Die Mitnehmerelemente 44 können hierfür einen verriegelten und einen entriegelten Zustand bezüglich des Spannrahmens 50 einnehmen, wie dies anhand der Figur 4 dargestellt ist. Die Figur 4 zeigt eine weitere Detaillierung einer erfindungsgemäßen Bearbeitungsstation 10 in einer perspektivischen Darstellung. Gezeigt ist ein Übergang zwischen dem Transferbereich 26 und dem Arbeitsbereich 24. Im Arbeitsbereich 24 befindet sich ein Spannrahmen 50, getragen von der Zuführvorrichtung 30. Das Übertragungselement 38 ist ausgehend von der Transferposition in eine Übernahmeposition verschoben, so dass eine der beiden Mitnehmerelemente 44 des Übertragungselements 38 annähernd in dem Übergang zwischen dem Transferbereich 26 und dem Arbeitsbereich 24 positioniert ist. Das Mitnehmerelement 44 weist eine nach oben hervorstehende Mitnehmergabel 54 auf, die in Querrichtung Y beweglich ist, so dass hierüber das Mitnehmerelement 44 den verriegelten und den entriegelten Zustand einnehmen kann. In der Figur 4 ist die Mitnehmergabel 54 in die entriegelte Stellung bezüglich des Spannrahmens 50 verschoben. Damit in der verriegelten Stellung der Mitnehmergabel 54, in der diese bezüglich der Darstellung der Figur 4 nach rechts verschoben ist, ein Formschluss zwischen dem Mitnehmerelement 44 und dem Spannrahmen 50 besteht, weist der Spannrahmen 50 zumindest einen nach unten weisend Koppelbolzen 56 auf, der formschlüssig von der Mitnehmergabel 44 umfasst wird. Bevorzugt ist, dass der Spannrahmen 50 für jedes Übertragungselement 36, 38 zwei Koppelbolzen 56₁ und 56₂ aufweist und zwar jeweils an in Längsrichtung X beabstandeten unteren Endbereichen des Spannrahmens 50.

Weiterhin lässt die Figur 4 einen der bevorzugt mehreren Betätigungsaktuatoren 58 erkennen, über den das Mitnehmerelement 44 zwischen dem verriegelten und den entriegelten Zustand betätigt werden kann. Bevorzugt ist der Betätigungsaktuator 58 pneumatisch betätigt. Der Betätigungsaktuator 58 überträgt eine Betätigungsbewegung über einen Koppelbolzen 60 auf eine Betätigungsgabel 62 des Mitnehmerelements 44. Die Betätigungsgabel 62 überträgt die Betätigungsbewegung wiederum innerhalb des Mitnehmerelements 44 auf die Mitnehmergabel 54. Der Betätigungsaktuator 58 ist in Längsrichtung X unbeweglich gegenüber der Zuführvorrichtung 30 gehalten.

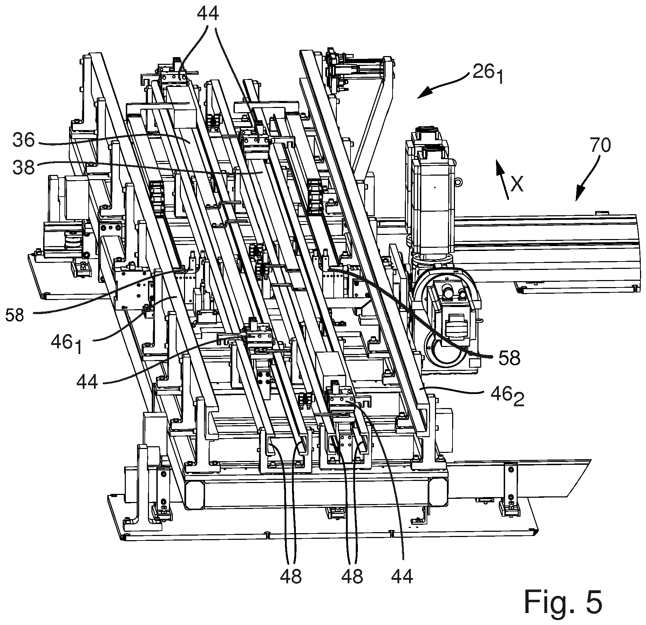

Die Figur 5 zeigt eine perspektivische Darstellung des Transferbereichs 26₁ einer erfindungsgemäßen Bearbeitungsstation 10. Dargestellt sind sechs Betätigungsaktuatoren 58, wobei drei Betätigungsaktuatoren 58 dem Übertragungselement 36 zugeordnet sind und zwischen diesem und der Schiene 46₁ angeordnet sein können und drei Betätigungsaktuatoren 58 dem Übertragungselement 38 zugeordnet sind und zwischen diesem und der Schiene 46₂ angeordnet sein können. Der Abstand in Längsrichtung X der beiden äußeren Betätigungsaktuatoren 58 zu dem mittleren Betätigungsaktuator 58 eines jeden Übertragungselements 36, 38 entspricht bevorzugt genau der Länge in Längsrichtung X des Übertragungselements 36, 38 beziehungsweise des Abstandes der Mitnehmerelemente 44 des Übertragungselements 36, 38.

Weiterhin ist eine zweite Antriebsanordnung 70 vorgesehen, wie dies der in der Figur 2 gezeigten Draufsicht zu entnehmen ist. Bevorzugt ist die zweite Antriebsanordnung 70 dazu vorgesehen, zumindest den Schienenabschnitt 66 des Transferbereichs 26 in Querrichtung Y zu verfahren. Hierzu umfasst die zweite Antriebsanordnung 70 eine Schienenanordnung 72, die beispielsweise drei parallel zueinander beabstandete Schienen 74₁, 74₂ und 74₃ aufweisen kann. Auch umfasst die zweite Antriebsanordnung 70 einen dritten Antrieb 76, um den Schienenabschnitt 66 auf den Schienen 74 in Querrichtung Y angetrieben zu verfahren. Bevorzugt ist weiterhin, dass zusammen mit dem Schienenabschnitt 66 die erste Antriebsanordnung 34, das heißt die Übertragungselemente 36, 38 und die Antriebe 40₁, 40₂, in Querrichtung Y verfahrbar ist. Bevorzugt ist eine der Schienen 74₁, 74₂, 74₃ mit einer Linearverzahnung versehen, so dass über einen Verzahnungseingriff in ein Zahnradritzel des Antriebs 76 eine Verfahrbewegung eingeleitet werden kann.

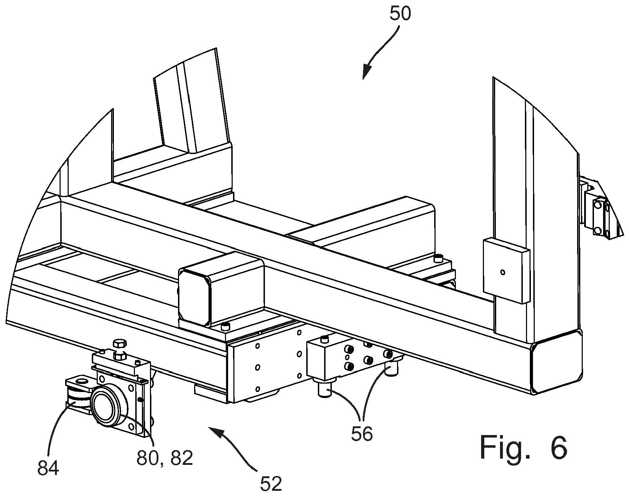

Die Figur 6 zeigt eine Detaillierung eines unteren, äußeren Endbereichs eines Spannrahmens 50. Zu erkennen ist insbesondere ein Teil einer Rollenanordnung 52, über die ein Spannrahmen 50 von den Schienen 46₁, 46₂ getragen und geführt wird. Es kann vorgesehen sein, dass die Rollenanordnung 52 aus vier Rolleneinheiten 78 besteht, wobei jede der Rolleneinheiten 78 im Bereich der unteren Ecken des Spannrahmens 50 angeordnet ist. Eine Rolleneinheit 78 kann eine Tragrolle 80, eine erste Führungsrolle 82 und eine zweite Führungsrolle 84 aufweisen. Hierbei ist die Tragrolle 80 derart ausgelegt, dass sie eine Vertikallast des Spannrahmens 50 nach unten auf die Schienen 46₁, 46₂ überträgt. Die erste Führungsrolle 82 ist parallel, nach oben versetzt zu der Tragrolle 80 angeordnet und derart ausgelegt, dass sie eine Vertikallast des Spannrahmens 50 nach oben auf die Schienen 46₁, 46₂ überträgt. Die zweite Führungsrolle 84 weist eine vertikale Drehachse auf und ist derart ausgelegt, dass sie die Verfahrbewegung des Spannrahmens 50 bezüglich der Schienen 46₁, 46₂ in seitlicher Richtung führt.

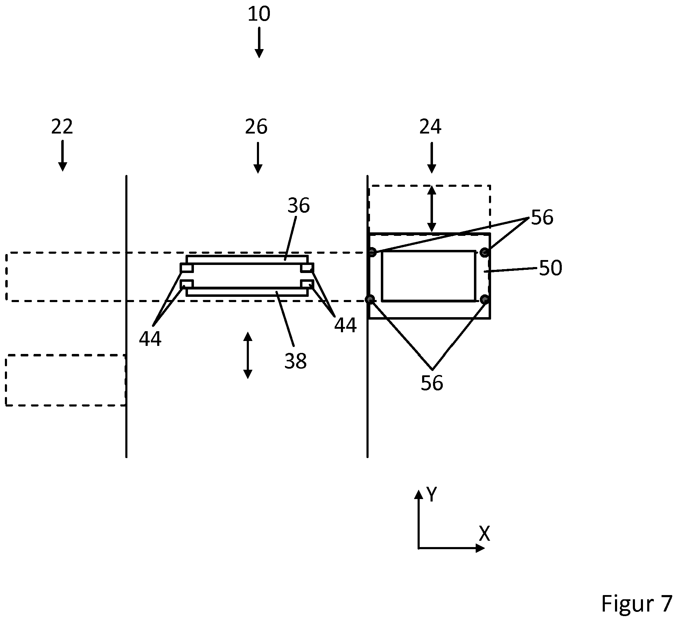

Anhand der Figuren 7 bis 8d) wird ein Verfahren zum Wechseln eines Spannrahmens 50 in einer Bearbeitungsstation 10 beschrieben. Gezeigt ist eine schematische Darstellung einer Bearbeitungsstation 10 mit der bereits beschriebenen Unterteilung in Magazinbereich 22, Transferbereich 26 und Arbeitsbereich 24. In dem oberen Bereich des Arbeitsbereichs 24 ist im Allgemeinen eine sogenannte Geobox angeordnet, in der die eigentliche Bearbeitung der Werkstücke stattfindet und an die ein gerade benötigter Spannrahmen 50 durch eine Bewegung in Querrichtung Y zugestellt wird, was durch den Doppelpfeil und den gestrichelten Kasten symbolisiert ist. Figur 7 zeigt einen Spannrahmen 50, der im Arbeitsbereich 26 in einer nicht zugestellten Position, das heißt aus einer Bearbeitungsposition zurückgezogenen Position, angeordnet ist. Zu dem Spannrahmen 50 sind die vier Kuppelbolzen 56 dargestellt. Die beiden Übertragungselemente 36, 38 sind in ihrer jeweiligen Transferposition dargestellt. Zu den Übertragungselementen 36, 38 sind jeweils die beiden Mitnehmerelemente 44 dargestellt. Weiterhin ist mit dem Doppelpfeil unterhalb der Übertragungselemente 36, 38 die Verfahrmöglichkeit des Schienenabschnitt 66 und der erste Antriebsanordnung 34 in Querrichtung Y symbolisiert. Der Magazinbereich 22 enthält vorliegend zwei Parkpositionen für Spannrahmen 50. Hierbei kann die obere Parkposition über eine alleinige Verfahrbewegung des Spannrahmens 50 in Längsrichtung X erreicht werden, wohingegen die untere Parkposition über eine kombinierte Verfahrbewegung sowohl in Längsrichtung X als auch in Querrichtung Y erreicht werden kann.

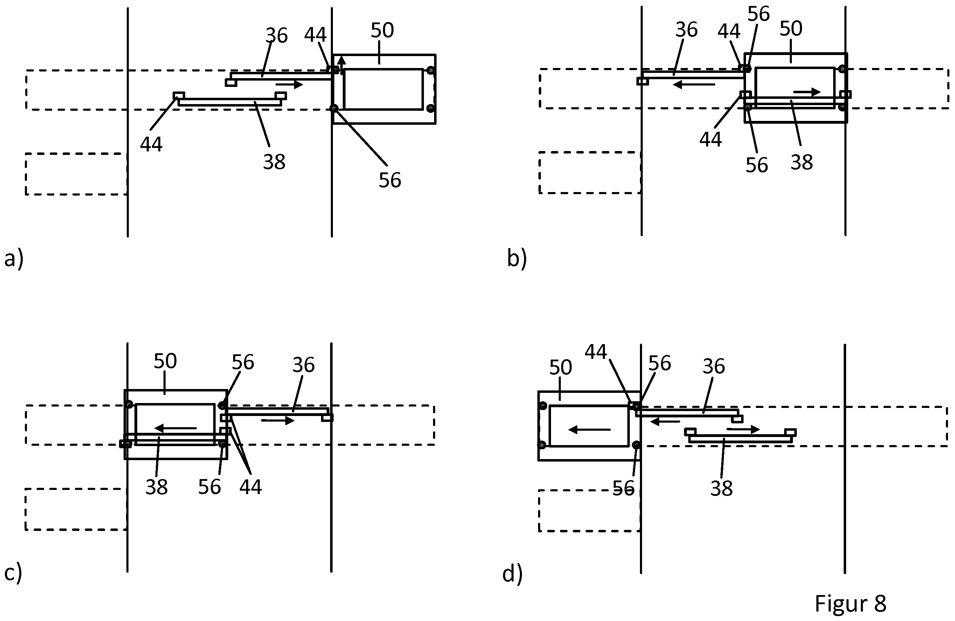

Die Figur 8a) zeigt den Verfahrensschritt, wonach das Übertragungselement 36 aus der Transferposition in eine Übernahmeposition in Richtung des Arbeitsbereichs 22 verschoben ist. Weiterhin ist das Mitnehmerelement 44 in die verriegelt Stellung verschoben, so dass es den Koppelbolzen 56 formschlüssig umgreift. Beide Bewegungen sind durch einen Pfeil symbolisiert. Die Figur 8b) zeigt den Verfahrensschritt, wonach der Spannrahmen 50 von dem Übertragungselement 36 in den Transferbereich 26 gezogen wurde. Hierbei hat das Übertragungselement 36 einen seiner doppelte Länge entsprechenden Verfahrweg in Längsrichtung X gemacht. Bevorzugt zeitgleich wird das Übertragungselement 38 aus der Transferposition in Richtung des Arbeitsbereichs 24 verfahren, so dass im Anschluss an diese Verfahrbewegungen das Übertragungselement 38 deckungsgleich zu dem Spannrahmen 50 angeordnet ist. In einem nächsten Verfahrensschritt, der nicht separat dargestellt ist, werden die Mitnehmerelemente 44 an der linke Seite des Spannrahmens 50 in die jeweils andere Stellung überführt, das heißt das Mitnehmerelement 44 des Übertragungselements 36 wird entriegelt und das Mitnehmerelement 44 des Übertragungselements 38 wird verriegelt.

Figur 8c) zeigt den Verfahrensschritt, in dem der Spannrahmen 50 von dem Übertragungselement 38 durch den Transferbereich 26 hindurch verfahren wurde, so dass der Spannrahmen 50 folglich vor dem Magazinbereich 22 steht. In einem nächsten Verfahrensschritt, der nicht separat dargestellt ist, werden die Mitnehmerelemente 44 an der rechten Seite des Spannrahmens 50 in die jeweils andere Stellung überführt, das heißt das Mitnehmerelement 44 des Übertragungselements 38 wird entriegelt und das Mitnehmerelement 44 des Übertragungselements 36 wird verriegelt. Die Figur 8d) zeigt den Verfahrensschritt, in dem der Spannrahmen von dem Übertragungselement 36 in dem Magazinbereich 22 verfahren wurde, um dort bis zur nächstmaligen Verwendung aufbewahrt zu werden.

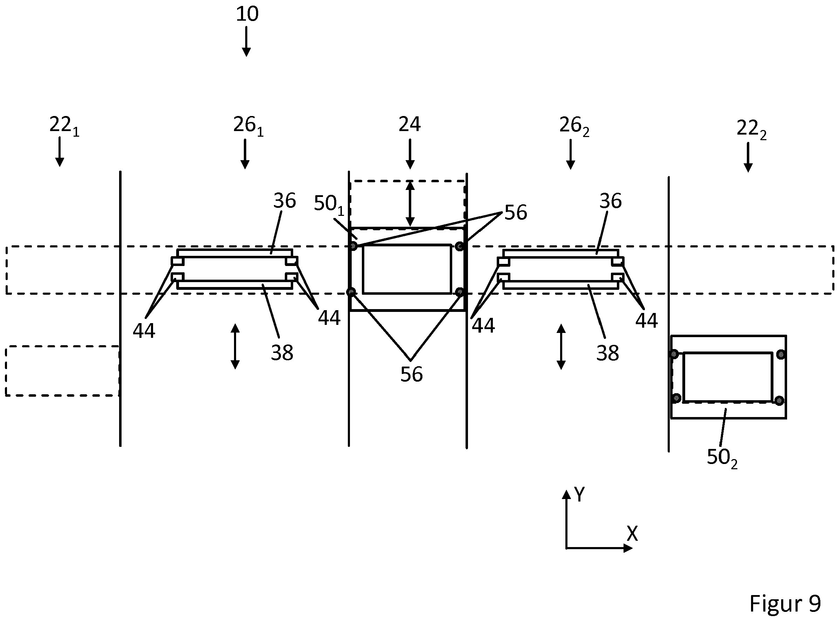

Die Figur 9 zeigt eine weitere Ausgestaltung einer erfindungsgemäßen Bearbeitungsstation 10, die weitestgehend mit der Darstellung der Figur 1 korrespondiert. Die gezeigte Bearbeitungsstation weist zu beiden Seiten des Arbeitsbereichs 24 jeweils einen Transferbereiche 26₁, 26₂ und jeweils einen Magazinbereich 22₁, 22₂ auf. Ein Spannrahmen 50₁ ist in dem Arbeitsbereich 24 angeordnet und ein zweiter Spannrahmen 50₂ ist in dem rechten Magazinbereich 22₂ in einer Vorhalteposition angeordnet. Die Art und Weise des Verfahrens der Spannrahmen 50₁, 50₂ entspricht grundsätzlich dem Vorgehen, wie zu der Figur 8 beschrieben. Durch die in der Figur 9 gezeigte Anordnung ergibt sich die Möglichkeit einer zeitsparenden Zuführung eines zweiten Spannrahmens 50₂ für einen zweiten Karosserietyp. Hierfür kann der zweite Spannrahmen 50₂, der beispielsweise für einen zweiten Karosserietyp vorgesehen sein kann, zunächst in den Transferbereich 26₂ verfahren werden. Anschließend wird der derzeit im Arbeitsbereich 24 befindliche Spannrahmen 50₁ in Richtung des Transferbereichs 26₂ verfahren, so dass der Arbeitsbereich 24 frei ist und der zweite Spannrahmen 50₂ aus dem Transferbereich 26₂ eingefahren werden kann.

### Bezugszeichenliste

- 10: Bearbeitungsstation
- 12: Förderstrecke
- 22: Magazinbereich
- 24: Arbeitsbereich
- 26: Transferbereich
- 30: Zuführvorrichtung
- 32: Schienenanordnung
- 34: Antriebsanordnung
- 36: Übertragungselement
- 38: Übertragungselement
- 40: Antrieb
- 42: Verzahnung
- 44: Mitnehmerelement
- 46: Schiene
- 48: Seitenführung
- 50: Spannrahmen
- 52: Rollenanordnung
- 54: Mitnehmergabel
- 56: Koppelbolzen
- 58: Betätigungsaktuator
- 60: Koppelbolzen
- 62: Betätigungsgabel
- 64: Schienenbereich
- 66: Schienenbereich
- 68: Schienenbereich
- 70: Antriebsanordnung
- 72: Schienenanordnung
- 74: Schiene
- 76: Antrieb
- 78: Rolleneinheit
- 80: Tragrolle
- 82: Führungsrolle
- 84: Führungsrolle

## Patentansprüche

1. Bearbeitungsstation (10), insbesondere Framingstation, für als Fahrzeugkarosserieteile ausgebildete Werkstücke, umfassend
eine Mehrzahl Spannrahmen (50₁, 50₂),
zumindest einen Magazinbereich (22) zum Vorhalten der Spannrahmen (50₁, 50₂),
einen Arbeitsbereich (24) zum Bearbeiten der Werkstücke und
eine Zuführvorrichtung (30) zum Zuführen der Spannrahmen (50₁, 50₂) zwischen dem zumindest einen Magazinbereich (22) und dem Arbeitsbereich (24) in einer Längsrichtung X und einer Querrichtung Y,
wobei die Zuführvorrichtung (30) eine bodenbasierte Schienenanordnung (32) zum Führen und Tragen der Spannrahmen (50₁, 50₂) und zumindest eine erste Antriebsanordnung (34) mit zwei parallel zu der Schienenanordnung (32) ausgerichteten Übertragungselementen (36, 38) aufweist, wobei die Übertragungselemente (36, 38) voneinander unabhängig an den jeweils zuzuführenden Spannrahmen (50₁, 50₂) ankoppelbar sind, um den Spannrahmen (50₁, 50₂) in einem angekoppelten Zustand in Längsrichtung X zu verfahren.

2. Bearbeitungsstation (10) nach Anspruch 1, **dadurch gekennzeichnet, dass** die Übertragungselemente (36, 38) Zahnstangen zur Übertragung der Verfahrbewegung in Längsrichtung X umfassen.

3. Bearbeitungsstation (10) nach Anspruch 1 oder 2, **dadurch gekennzeichnet, dass** die Antriebsanordnung (34) jeweilige mit den Übertragungselementen (36, 38) in einer Wirkverbindung stehende Antriebe (40) umfasst.

4. Bearbeitungsstation (10) nach Anspruch 2 oder 3, **dadurch gekennzeichnet, dass** eine Verzahnung (42) der Zahnstangen (36, 38) nach vertikal unten gerichtet ist.

5. Bearbeitungsstation (10) nach einem der Ansprüche 1 bis 4, **dadurch gekennzeichnet, dass** die Spannrahmen (50₁, 50₂) jeweils zumindest eine Rollenanordnung (52) umfassen, wobei die Spannrahmen (50₁, 50₂) über die Rollenanordnung (52) gegenüber der Schienenanordnung (32) gelagert sind.

6. Bearbeitungsstation (10) nach einem der Ansprüche 1 bis 5, **dadurch gekennzeichnet, dass** an in Längsrichtung X entgegengesetzten Endbereichen der Übertragungselemente (36, 38) Mitnehmerelemente (44) zum Ankoppeln der Spannrahmen (50₁, 50₂) an die Übertragungselemente (36, 38) angeordnet sind.

7. Bearbeitungsstation (10) nach Anspruch 6, **dadurch gekennzeichnet, dass** die Antriebsanordnung (34), vorzugsweise pneumatische betätigte, Betätigungsaktuatoren (58) umfasst, über die in jeweiligen Übernahmepositionen der Übertragungselemente (36, 38) die Mitnehmerelemente (44) an die Spannrahmen (50₁, 50₂) ankoppelbar sind.

8. Bearbeitungsstation (10) nach Anspruch 7, **dadurch gekennzeichnet, dass** die Spannrahmen (50) Koppelbolzen (56) aufweisen, über die die Spannrahmen (50₁, 50₂) formschlüssig an die Mitnehmerelemente (44) ankoppelbar sind.

9. Bearbeitungsstation (10) nach einem der Ansprüche 1 bis 8, **dadurch gekennzeichnet, dass** sich die Zuführvorrichtung (30) in Längsrichtung X von dem Magazinbereich (22), über einen Transferbereich (26) bis in den Arbeitsbereich (24) erstreckt, wobei die Antriebsanordnung (34) im Transferbereich (26) angeordnet ist.

10. Bearbeitungsstation (10) nach Anspruch 9, **dadurch gekennzeichnet, dass** die Schienenanordnung (32) im Magazinbereich (22), im Transferbereich (26) und im Arbeitsbereich (24) untereinander getrennte Schienenabschnitte (64, 66, 68) bildet.

11. Bearbeitungsstation (10) nach Anspruch 10, **dadurch gekennzeichnet, dass** der im Transferbereich (26) angeordnete Schienenabschnitt (66) mittels einer zweiten Antriebsanordnung (70) in Querrichtung Y verfahrbar ist.

12. Bearbeitungsstation (10) nach Anspruch 10 oder 11, **dadurch gekennzeichnet, dass** der im Arbeitsbereich (24) angeordnete Schienenabschnitt (68) mittels einer dritten Antriebsanordnung in Querrichtung Y verfahrbar ist.

13. Verfahren zum Wechseln eines Spannrahmens (50) in einer Bearbeitungsstation (10) gemäß einer der Ansprüche 1 bis 12, wobei sich ein erster Spannrahmen (50₁) in dem Arbeitsbereich (24) in Bearbeitungsposition und zumindest ein zweiter Spannrahmen (50₂) in dem Magazinbereich (22) in einer Vorhalteposition befindet, mit den Schritten:
- Verfahren des ersten Spannrahmens (50₁) im Arbeitsbereich (24) heraus aus einer Bearbeitungsposition in Querrichtung Y;
- Ankoppeln des ersten Übertragungselements (36) der ersten Antriebsanordnung (34) an den ersten Spannrahmen (50₁);
- Verfahren des ersten Spannrahmens (50₁) über das erste Übertragungselement (36) der ersten Antriebsanordnung (34) in Längsrichtung X von dem Arbeitsbereich (24) in einen Transferbereich (26₁) in eine Übernahmeposition;
- Verfahren des zweiten Übertragungselements (38) der ersten Antriebsanordnung (34) in Längsrichtung X in die Übernahmeposition;
- Ankoppeln des zweiten Übertragungselements (38) der ersten Antriebsanordnung (34) an den ersten Spannrahmen (50₁);
- Abkoppeln des ersten Übertragungselements (36) der ersten Antriebsanordnung (34) von dem ersten Spannrahmen (50₁);
- Verfahren des ersten Spannrahmens (50₁) über das zweite Übertragungselement (38) der ersten Antriebsanordnung (34) in Längsrichtung X in eine Transferposition in dem Transferbereich (26₁);
- Verfahren des ersten Übertragungselements (36) der ersten Antriebsanordnung (34) in die Transferposition.

14. Verfahren nach Anspruch 13, bei dem zeitgleich zu dem Verfahren des ersten Spannrahmens (50₁) über das erste Übertragungselement (36) der ersten Antriebsanordnung (34)in die Übernahmeposition in dem Transferbereich (26₁) die folgenden Schritte ausgeführt werden:
- Verfahren des zweiten Spannrahmen (50₂) über das zweite Übertragungselement (38) der zweiten Antriebsanordnung (70) in Längsrichtung X in eine Übernahmeposition eines zweiten Transferbereichs (26₂);
- Verfahren des ersten Übertragungselements (34) der zweiten Antriebsanordnung (70) in Längsrichtung X in die Übernahmeposition des zweiten Transferbereichs (26₂);
- Ankoppeln des ersten Übertragungselements (34) der zweiten Antriebsanordnung (70) an den zweiten Spannrahmen (50₂) und Abkoppeln des zweiten Übertragungselements (38) der zweiten Antriebsanordnung (70) von dem zweiten Spannrahmen (50₂);
- Verfahren des zweiten Spannrahmens (50₂) über das erste Übertragungselement (36) der zweiten Antriebsanordnung (70) in Längsrichtung X von der Übernahmeposition des Transferbereichs (26₂) in den Arbeitsbereich (24);
- Verfahren des zweiten Spannrahmens (50₂) im Arbeitsbereich (24) in die Bearbeitungsposition in Querrichtung Y.

## Claims

1. Processing station (10), in particular a framing station, for workpieces in the form of vehicle-body parts, comprising
a plurality of clamping frames (50₁, 50₂),
at least one magazine region (22) for holding the clamping frames (50₁, 50₂),
a working region (24) for processing the workpieces, and
a feeding apparatus (30) for feeding the clamping frames (50₁, 50₂) in a longitudinal direction X and a transverse direction Y between the at least one magazine region (22) and the working region (24), wherein the feeding apparatus (30) comprises a floor-based rail arrangement (32) for guiding and carrying the clamping frames (50₁, 50₂), and also comprises at least a first drive arrangement (34) with two transmission elements (36, 38), which are oriented parallel to the rail arrangement (32), wherein the transmission elements (36, 38) can be coupled, independently of one another, to the clamping frame (50₁, 50₂) which is to be fed in each case, so that the clamping frame (50₁, 50₂), in a coupled state, is disclosed in the longitudinal direction X.

2. Processing station (10) according to Claim 1, **characterized in that** the transmission elements (36, 38) comprise racks for transmitting the displacement movement in the longitudinal direction X.

3. Processing station (10) according to Claim 1 or 2, **characterized in that** the drive arrangement (34) comprises respective drives (40), which are in operative connection with the transmission elements (36, 38).

4. Processing station (10) according to Claim 2 or 3, **characterized in that** a toothing formation (42) of the racks (36, 38) is directed vertically downwards.

5. Processing station (10) according to one of Claims 1 to 4, **characterized in that** the clamping frames (50₁, 50₂) each comprise at least one roller arrangement (52), wherein the clamping frames (50₁, 50₂) are mounted opposite the rail arrangement (32) via the roller arrangement (52).

6. Processing station (10) according to one of Claims 1 to 5, **characterized in that** carry-along elements (44) are arranged at opposite end regions of the transmission elements (36, 38), as seen in the longitudinal direction X, for the purpose of coupling the clamping frames (50₁, 50₂) to the transmission elements (36, 38).

7. Processing station (10) according to Claim 6, **characterized in that** the drive arrangement (34) comprises actuators (58), preferably pneumatically activated ones, via which, in respective receiving positions of the transmission elements (36, 38), the carry-along elements (44) can be coupled to the clamping frames (50₁, 50₂) .

8. Processing station (10) according to Claim 7, **characterized in that** the clamping frames (50) comprise coupling pins (56), via which the clamping frames (50₁, 50₂) can be coupled to the carry-along elements (44) in a form-fitting manner.

9. Processing station (10) according to one of Claims 1 to 8, **characterized in that** the feeding apparatus (30) extends in the longitudinal direction X from the magazine region (22), via a transfer region (26), into the working region (24), wherein the drive arrangement (34) is arranged in the transfer region (26).

10. Processing station (10) according to Claim 9, **characterized in that**, in the magazine region (22), in the transfer region (26) and in the working region (24), the rail arrangement (32) forms rail portions (64, 66, 68) which are separate from one another.

11. Processing station (10) according to Claim 10, **characterized in that** the rail portion (66), which is arranged in the transfer region (26), can be displaced in the transverse direction Y by means of a second drive arrangement (70).

12. Processing station (10) according to Claim 10 or 11, **characterized in that** the rail portion (68), which is arranged in the working region (24), can be displaced in the transverse direction Y by means of a third drive arrangement.

13. Method for changing over a clamping frame (50) in a processing station (10) according to one of Claims 1 to 12, wherein a first clamping frame (50₁) is located in a processing position in the working region (24) and at least a second clamping frame (50₂) is located in a holding position in the magazine region (22), the method having the following steps:
- the first clamping frame (50₁) in the working region (24) is displaced in the transverse direction Y out of a processing position;
- the first transmission element (36) of the drive arrangement (34) is coupled to the first clamping frame (50₁) ;
- the first clamping frame (50₁) is displaced in the longitudinal direction X, via the first transmission element (36) of the first drive arrangement (34), from the working region (24) into a receiving position in a transfer region (26₁) ;
- the second transmission element (38) of the first drive arrangement (34) is displaced in the longitudinal direction X into the receiving position;
- the second transmission element (38) of the first drive arrangement (34) is coupled to the first clamping frame (50₁);
- the first transmission element (36) of the first drive arrangement (34) is uncoupled from the first clamping frame (50₁);
- the first clamping frame (50₁) is displaced in the longitudinal direction X, via the second transmission element (38) of the first drive arrangement (34), into a transfer position in the transfer region (26₁);
- the first transmission element (36) of the first drive arrangement (34) is displaced into the transfer position.

14. Method according to Claim 13, in which, at the same time as the first clamping frame (50₁) is being displaced, via the first transmission element (36) of the first drive arrangement (34), into the receiving position in the transfer region (26₁), the following steps are performed:
- the second clamping frame (50₂) is displaced in the longitudinal direction X, via the second transmission element (38) of the second drive arrangement (70), into a receiving position in a second transfer region (26₂) ;
- the first transmission element (34) of the second drive arrangement (70) is displaced in the longitudinal direction X into the receiving position in the second transfer region (26₂) ;
- the first transmission element (34) of the second drive arrangement (70) is coupled to the second clamping frame (50₂), and the second transmission element (38) of the second drive arrangement (70) is uncoupled from the second clamping frame (50₂) ;
- the second clamping frame (50₂) is displaced in the longitudinal direction X, via the first transmission element (36) of the second drive arrangement (70), into the working region (24) from the receiving position in the transfer region (26₂) ;
- the second clamping frame (50₂) is displaced in the transverse direction Y into the processing position in the working region (24).

## Revendications

1. Poste de traitement (10), en particulier poste d'assemblage, pour pièces réalisées sous forme de pièces de carrosserie de véhicule, comportant
une pluralité de cadres de serrage (50₁, 50₂),
au moins une zone de dépôt (22) pour tenir à disposition les cadres de serrage (50₁, 50₂),
une zone de travail (24) pour le traitement des pièces et
un dispositif d'acheminement (30) pour l'acheminement des cadres de serrage (50₁, 50₂) entre ladite au moins une zone de dépôt (22) et la zone de travail (24) dans une direction longitudinale X et une direction transversale Y,
le dispositif d'acheminement (30) comprenant un ensemble de rails (32) basé sur le sol pour guider et supporter les cadres de serrage (50₁, 50₂) et au moins un premier ensemble d'entraînement (34) doté de deux éléments de transmission (36, 38) orientés parallèlement à l'ensemble de rails (32), les éléments de transmission (36, 38) pouvant être, indépendamment l'un de l'autre, accouplés au cadre de serrage (50₁, 50₂) à acheminer respectivement, afin de déplacer le cadre de serrage (50₁, 50₂) dans la direction longitudinale X dans un état accouplé.

2. Poste de traitement (10) selon la revendication 1, **caractérisé en ce que** les éléments de transmission (36, 38) comportent des crémaillères pour la transmission du mouvement de déplacement dans la direction longitudinale X.

3. Poste de traitement (10) selon la revendication 1 ou 2, **caractérisé en ce que** l'ensemble d'entraînement (34) comporte des entraînements (40) respectifs en liaison fonctionnelle avec les éléments de transmission (36, 38).

4. Poste de traitement (10) selon la revendication 2 ou 3, **caractérisé en ce qu'**une denture (42) des crémaillères (36, 38) est orientée verticalement vers le bas.

5. Poste de traitement (10) selon l'une des revendications 1 à 4, **caractérisé en ce que** les cadres de serrage (50₁, 50₂) comportent respectivement au moins un ensemble de rouleaux (52), les cadres de serrage (50₁, 50₂) étant supportés par rapport à l'ensemble de rails (32) par le biais de l'ensemble de rouleaux (52).

6. Poste de traitement (10) selon l'une des revendications 1 à 5, **caractérisé en ce que** des éléments d'entraînement (44) servant à accoupler les cadres de serrage (50₁, 50₂) aux éléments de transmission (36, 38) sont disposés au niveau de zones d'extrémité, opposées dans la direction longitudinale X, des éléments de transmission (36, 38).

7. Poste de traitement (10) selon la revendication 6, **caractérisé en ce que** l'ensemble d'entraînement (34) comprend des actionneurs d'actionnement (58), de préférence actionnés de manière pneumatique, par le biais desquels les éléments d'entraînement (44) peuvent être accouplés aux cadres de serrage (50₁, 50₂) dans des positions de réception respectives des éléments de transmission (36, 38).

8. Poste de traitement (10) selon la revendication 7, **caractérisé en ce que** les cadres de serrage (50) comprennent des goupilles d'accouplement (56) par le biais desquelles les cadres de serrage (50₁, 50₂) peuvent être accouplés par complémentarité de forme aux éléments d'entraînement (44).

9. Poste de traitement (10) selon l'une des revendications 1 à 8, **caractérisé en ce que** le dispositif d'acheminement (30) s'étend dans la direction longitudinale X à partir de la zone de dépôt (22), via une zone de transfert (26), jusque dans la zone de travail (24), l'ensemble d'entraînement (34) étant disposé dans la zone de transfert (26).

10. Poste de traitement (10) selon la revendication 9, **caractérisé en ce que** l'ensemble de rails (32) forme, dans la zone de dépôt (22), dans la zone de transfert (26) et dans la zone de travail (24), des parties de rail (64, 66, 68) séparées les unes des autres.

11. Poste de traitement (10) selon la revendication 10, **caractérisé en ce que** la partie de rail (66) disposée dans la zone de transfert (26) est déplaçable dans la direction transversale Y au moyen d'un deuxième ensemble d'entraînement (70).

12. Poste de traitement (10) selon la revendication 10 ou 11, **caractérisé en ce que** la partie de rail (68) disposée dans la zone de travail (24) est déplaçable dans la direction transversale Y au moyen d'un troisième ensemble d'entraînement.

13. Procédé de remplacement d'un cadre de serrage (50) dans un poste de traitement (10) selon l'une des revendications 1 à 12, dans lequel un premier cadre de serrage (50₁) dans la zone de travail (24) se trouve dans la position de traitement et au moins un deuxième cadre serrage (50₂) dans la zone de dépôt (22) se trouve dans une position de mise à disposition, le procédé comprenant les étapes de :
- déplacement du premier cadre de serrage (50₁) dans la zone de travail (24) hors d'une position de traitement dans la direction transversale Y ;
- accouplement du premier élément de transmission (36) du premier ensemble d'entraînement (34) au premier cadre de serrage (50₁) ;
- déplacement du premier cadre de serrage (50₁) par le biais du premier élément de transmission (36) du premier ensemble d'entraînement (34) dans la direction longitudinale X à partir de la zone de travail (24) dans une zone de transfert (26₁) dans une position de réception;
- déplacement du deuxième élément de transmission (38) du premier ensemble d'entraînement (34) dans la direction longitudinale X dans la position de réception ;
- accouplement du deuxième élément de transmission (38) du premier ensemble d'entraînement (34) au premier cadre de serrage (50₁) ;
- désaccouplement du premier élément de transmission (36) du premier ensemble d'entraînement (34) du premier cadre de serrage (50₁) ;
- déplacement du premier cadre de serrage (50₁) par le biais du deuxième élément de transmission (38) du premier ensemble d'entraînement (34) dans la direction longitudinale X dans une position de transfert dans la zone de transfert (26₁) ;
- déplacement du premier élément de transmission (36) du premier ensemble d'entraînement (34) dans la position de transfert.

14. Procédé selon la revendication 13, selon lequel, simultanément au déplacement du premier cadre de serrage (50₁) par le biais du premier élément de transmission (36) du premier ensemble d'entraînement (34) dans la position de réception dans la zone de transfert (26₁), les étapes suivantes sont effectuées :
- déplacement du deuxième cadre de serrage (50₂) par le biais du deuxième élément de transmission (38) du deuxième ensemble d'entraînement (70) dans la direction longitudinale X dans une position de réception d'une deuxième zone de transfert (26₂) ;
- déplacement du premier élément de transmission (34) du deuxième ensemble d'entraînement (70) dans la direction longitudinale X dans la position de réception de la deuxième zone de transfert (26₂) ;
- accouplement du premier élément de transmission (34) du deuxième ensemble d'entraînement (70) au deuxième cadre de serrage (50₂) et désaccouplement du deuxième élément de transmission (38) du deuxième ensemble d'entraînement (70) du deuxième cadre de serrage (50₂) ;
- déplacement du deuxième cadre de serrage (50₂) par le biais du premier élément de transmission (36) du deuxième ensemble d'entraînement (70) dans la direction longitudinale X à partir de la position de réception de la zone de transfert (26₂) dans la zone de travail (24) ;
- déplacement du deuxième cadre de serrage (50₂) dans la zone de travail (24) dans la position de traitement dans la direction transversale Y.
